# EUROPÄISCHE PATENTSCHRIFT

(11) **EP 1 380 737 B1**
(45) Veröffentlichungstag und Bekanntmachung des Hinweises auf die Patenterteilung: **20.04.2005**
(21) Anmeldenummer: 03405416.3
(22) Anmeldetag: 11.06.2003
(51) Int. Cl.: F02B 25/04, F02B 29/08, F02B 37/20, F02B 69/06, F02D 13/02

(54) **Verfahren zum Betreiben einer Zweitakt-Hubkolbenbrennkraftmaschine**
Method for operating a two stroke reciprocating piston internal combustion engine
Procédé de fonctionnement d'un moteur à combustion interne à deux temps à piston alternatif

(30) Priorität: 09.07.2002 EP 02405578
(43) Veröffentlichungstag der Anmeldung: 14.01.2004
(73) Patentinhaber: Wärtsilä Schweiz AG, 8401 Winterthur (CH)
(72) Erfinder: Zandt, Pieter, 8422 Pfungen (CH)
(74) Vertreter: Sulzer Management AG

(56) Entgegenhaltungen:
- EP-A- 0 384 492
- EP-A- 0 579 590
- DE-B- 1 121 406
- US-A- 2 820 339

## Beschreibung

Die Erfindung betrifft ein Verfahren zum Betreiben einer Zweitakt-Hubkolbenbrennkraftmaschine, sowie eine nach dem Verfahren betriebene Hubkolbenbrennkraftmaschine gemäss dem Oberbegriff des unabhängigen Anspruchs der jeweiligen Kategorie.

Zur Leistungssteigerung von Hubkolbenbrennkraftmaschinen, wie zum Beispiel von Zweitakt-Grossdieselmotoren für Schiffe oder stationäre Anlagen zur Erzeugung elektrischer Energie, wird nach einem Verbrennungstakt die Frischluft mittels einer Aufladegruppe, die in der Regel als Abgasturbolader ausgelegt ist, unter erhöhtem Druck in den Brennraum eines Zylinders eingebracht. Dabei kann ein Teil der thermischen Energie der Abgase ausgenutzt werden, die den Brennraum des Zylinders nach dem Verbrennungstakt verlassen. Dazu werden die heissen Abgase durch Öffnen eines Auslassventils aus dem Brennraum des Zylinders der Aufladegruppe zugeführt. Die Aufladegruppe besteht im wesentlichen aus einer Turbine, die durch die unter Druck in die Aufladegruppe eintretenden heissen Abgase angetrieben wird. Die Turbine treibt ihrerseits ein Laufrad an, wodurch Frischluft angesaugt und verdichtet wird. Der Turbine mit Laufrad als Verdichter, eine Anordnung, die häufig auch einfach als Turbolader bezeichnet wird, ist ein Diffusor, ein Ladeluftkühler mit Wasserabscheider und ein Einlassreceiver nachgeschaltet, von wo aus die komprimierte Frischluft, auch als Ladeluft oder Spülluft bezeichnet, schliesslich in die einzelnen Zylinder des Grossdieselmotors eingespeist wird. Je nach Typ des Grossdieselmotors erfolgt die Einspeisung der Luft an unterschiedlichen Stellen am Zylinder. So wird beispielsweise bei längsgespülten Zweitakt-Motoren die Luft über Spülschlitze, die in der Lauffläche im unteren Bereich des Zylinders angeordnet sind, in den Brennraum des Zylinders eingebracht. EP 0 579 590 zeigt z.B. solch eine Brennkraftmaschine. Bei Viertakt-Motoren wird die Ladeluft in der Regel über ein oder mehrere Einlassventile, die im Zylinderdeckel angeordnet sind, in den Brennraum des Zylinders eingebracht. Dabei sind durchaus auch Zweitakt-Motoren bekannt, die an Stelle von Spülschlitzen im unteren Bereich des Zylinders mit Einlassventilen im Zylinderdeckel ausgerüstet sind.

Da die Turbine der Aufladegruppe allein durch die aus dem Brennraum des Zylinders entweichenden heissen Abgase angetrieben wird, arbeiten die bekannten Aufladegruppen für Grossdieselmotoren insbesondere kurz nach dem Start bzw. unterhalb einer bestimmten Grenzdrehzahl der Maschine nur wenig effektiv. Daher wird die Aufladegruppe häufig durch einen oder mehrere zusätzliche mechanische oder elektrische Hilfslader ergänzt, um unterhalb der Grenzdrehzahl eine entsprechende Drehmomentsteigerung zu erreichen. Der Hilfslader saugt üblicherweise die Luft aus einem ersten Raum, der dem Ladeluftkühler nachgeordnet ist, an und fördert diese in einen zweiten Raum, aus dem die Luft dann über die Spülschlitze in den Zylinder einströmen kann. Ein Zurückströmen der Luft in den ersten Raum wird dabei meist durch als Klappen ausgebildete Rückströmsicherungen verhindert. Solche Hilfslader sind häufig als elektrische Gebläse mit jeweils bis zu 200 kW elektrischer Leistung ausgelegt und unterstützen bzw. ersetzen den Abgasturbolader unterhalb der Grenzdrehzahl, die typischerweise bei ca. 10 % bis 50 %, speziell zwischen 30 % und 35 % der Vollastleistung des Grossdieselmotors erreicht wird. Ist die Grenzdrehzahl überschritten, kann auf den zusätzlichen elektrischen Hilfslader verzichtet werden, d.h. der Hilfslader wird abgeschaltet und die Maschine wird allein durch den Abgasturbolader aufgeladen. In diesem Betriebszustand, d.h. nach dem Abschalten der Hilfslader, sind die oben genannten Klappen geöffnet und ermöglichen damit ein direktes Überströmen der Ladeluft aus dem ersten Raum, der dem Ladeluftkühler nachgeordnet ist, in den zweiten Raum, aus dem die Luft den Spülschlitzen zugeführt wird.

Die Nachteile, die der Einsatz zusätzlicher Hilfslader zur Unterstützung des Abgasturboladers im Niederlastbetrieb mit sich bringt sind offensichtlich.

Wenn auch durch den Einsatz von Hilfsladem zur Unterstützung des Abgasturboladers im Niederlastbereich eine Verbesserung der Zylinderspülung erreichbar ist, wird der Brennraum des Zylinders bei den bekannten Zweitakt-Verfahren im Niederlastbereich unterhalb einer gewissen Grenzdrehzahl dennoch entweder nur unzureichend gespült, so dass im anschliessenden Verbrennungstakt Frischluft nicht in ausreichender Menge zur Verfügung steht, oder aber es wird bei kleinen Drehzahlen dem Brennraum eine zu grosse Menge an Frischluft zugeführt. Das heisst, die Menge an zugeführter Luft kann bei den bekannten Verfahren zum Betreiben einer Hukolbenbrennkraftmaschine nicht gesteuert oder geregelt werden.

Neben den Anschaffungskosten für die Hilfslader müssen zu deren Steuerung und / oder Regelung zusätzliche Einrichtungen installiert werden. Durch die zuvor erwähnten Klappen, die als Rückströmsicherungen während des Betriebs der Hilfslader unerlässlich sind, ist die Gestaltung des Einlassreceivers relativ aufwendig. Zusätzliche Aggregate erfordern selbstverständlich einen zusätzlichen Wartungs- und Reparaturaufwand mit den damit verbundenen Mehrkosten für Betriebsmittel, Ersatzteile und Personal. Darüber hinaus beanspruchen die Hilfslader sowie die Unterteilung des Einlassreceiver in einen durch die Klappen getrennten ersten und zweiten Raum, relativ viel Platz, der meist knapp bemessen ist und bedingen zusätzliches Gewicht. Ausserdem ist der Betrieb mit Hilfsladern auch aus energetischer Sicht ungünstig, da beispielsweise die für den Betrieb elektrischer Hilfslader notwendige elektrische Energie zur Verfügung gestellt werden muss. Das heisst, letztlich resultiert der Betrieb der Hilfslader, auch wegen des zusätzlichen Gewichts, in einem erhöhten Treibstoffverbrauch.

Die Aufgabe der Erfindung ist es daher, ein Verfahren zum Betreiben einer Zweitakt-Hubkolbenbrennkraftmaschine, insbesondere eines Zweitakt-Grossdieselmotors vorzuschlagen, welches insbesondere in einem Lastbereich unterhalb einer vorgegebenen Grenzdrehzahl einen effizienteren Betrieb der Hubkolbenbrennkraftmaschine ermöglicht, ohne dass dafür zusätzliche mechanische, elektrische oder andere Hilfslader vonnöten sind. Ferner ist es eine Aufgabe der Erfindung, eine Hubkolbenbrennkraftmaschine vorzuschlagen, die nach dem Verfahren betrieben wird.

Die diese Aufgaben in verfahrenstechnischer und apparativer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Erfindungsgemäss wird somit ein Verfahren zum Betreiben einer Zweitakt-Hubkolbenbrennkraftmaschine, insbesondere eines Grossdieselmotors vorgeschlagen. Die Zweitakt-Hubkolbenbrennkraftmaschine umfasst einen Zylinder mit einem Auslassventil und einer Spülluftöffnung, in welchem Zylinder ein Kolben entlang einer Lauffläche zwischen einer unteren Totpunktposition und einer oberen Totpunktposition hin- und herbewegt wird, sowie eine Aufladegruppe mit einer von Abgasen aus dem Brennraum eines Zylinders angetriebenen Turbine mit Laufrad zum Verdichten von Luft, wobei die verdichtete Luft als Spülluft dem Brennraum des Zylinders durch die Spülluftöffnung zugeführt wird. Dabei wird zumindest unterhalb einer vorgebbaren Grenzdrehzahl nach erfolgter Kraftstoffeinspritzung mit nachfolgender Verbrennung und vor einem daran anschliessenden Eintritt der Spülluft in den Brennraum des Zylinders, das Auslassventil in einer Vorspülphase zuerst geöffnet und dann geschlossen.

Bevorzugt kommt das erfindungsgemässe Verfahren beim Betrieb eines Zweitakt-Grosdieselmotors, insbesondere Kreuzkopf-Grossdieselmotor, mit Längsspülung unterhalb einer vorgebbaren Grenzdrehzahl zum Einsatz, beispielsweise nach einem Start des Grossdieselmotors. Unterhalb einer vorgebbaren Grenzdrehzahl erbringt ein Turbolader, der von den aus den aus den Brennräumen der Zylinder des Motors austretenden heissen Abgasen gespeist wird, noch nicht die erforderliche Leistung und wird daher herkömmlicherweise durch zusätzliche, in der Regel elektrisch betriebene Gebläse, die als Hilfslader ausgebildet sind, unterstützt. Durch Anwendung des erfindungsgemässen Verfahrens kann auf solche zusätzlichen Gebläse verzichtet werden.

In einer bevorzugten Ausführungsvariante des erfindungsgemässen Verfahrens wird die Spülluft durch Spülluftöffnungen, die als Spülschlitze in der Zylinderwand ausgebildet sind, dem Brennraum des Zylinders zugeführt, das heisst der Grossdieselmotor ist als Zweitakt-Motor mit Längsspülung ausgelegt. Dabei ist die Anwendung des Verfahrens nicht auf Zweitakt-Motoren mit Längsspülung beschränkt. Bei einem erfindungsgemässen Verfahren wird nach erfolgter Kraftstoffeinspritzung mit folgender Verbrennung und vor einem daran anschliessenden Eintritt der Spülluft in den Brennraum des Zylinders, das Auslassventil nur unterhalb einer vorgebbaren Grenzdrehzahl in einer Vorspülphase zuerst geöffnet und dann geschlossen. Nach einem Kompressionstakt mit anschliessender Verbrennung stehen in einem Brennraum eines Zylinders der Hubkolbenbrennkraftmaschine heisse Verbrennungsgase unter einem Arbeitsdruck an, wodurch ein Kolben in einem Expansionstakt in bekannter Weise in Richtung einer unteren Totpunktposition, entsprechend einem Kurbelwinkel von 180°, bewegt wird. Wie üblich wird die untere Totpunktposition des Kolbens, bei welcher der von Zylinder, Zylinderdeckel und Kolben begrenzte Brennraum ein maximales Volumen aufweist, mit einem Kurbelwinkel von 180° identifiziert, während eine obere Totpunktposition, bei welcher der Brennraum ein minimales Volumen aufweist, mit einem Kurbelwinkel von 0° bzw. 360° identifiziert wird. Das Auslassventil ist unmittelbar nach dem Verbrennungsvorgang zunächst noch geschlossen. In der sich an die Verbrennung anschliessenden Vorspülphase wird, bevor der Kolben nach der Verbrennung die Spülschlitze erstmals freigibt, bei einem ersten vorgebbaren Kurbelwinkel das Auslassventil geöffnet. Dabei wird der erste Kurbelwinkel so gewählt, dass beim Öffnen des Auslassventils zwischen dem Brennraum des Zylinders und einem Abgasstutzen, der dazu geeignet ist, der Aufladegruppe die Verbrennungsgase aus dem Brennraum des Zylinders zuzuführen, eine Druckdifferenz besteht, so dass aufgrund der Druckdifferenz die heissen Abgase durch den Abgasstutzen in den Turbolader gelangen und dort die Turbine und damit das Laufrad antreiben, wodurch komprimierte Luft als Spülluft zum Einbringen in den Brennraum eines Zylinders, dessen Spülschlitze zu diesem Zeitpunkt vom entsprechenden Kolben freigegeben sind, zur Verfügung gestellt wird. Das heisst, durch das Öffnen des Auslassventils wird in bekannter Weise ein Teil der thermischen Energie der Abgase bereits vor Freigabe der Spülschlitze, also vor dem Einströmen der Spülluft in den Brennraum des Zylinder zum Antrieb der Turbine des Turboladers genutzt.

Wenn die Druckdifferenz zwischen Brennraum und Abgasstutzen im wesentlichen ausgeglichen ist, wird das Auslassventil noch während der Vorspülphase bei einem zweiten Kurbelwinkel wieder geschlossen. Da die maximale Druckdifferenz zwischen Brennraum und Einlassreceiver von dem Kurbelwinkel abhängt, bei dem in der Vorspülphase das Auslassventil wieder geschlossen wird, kann die Menge an Frischluft, die während der Vorspülphase nach Freigabe der Spülschlitze in den Brennraum eingebracht wird, durch die Vorgabe des Kurbelwinkels, bei welchem das Auslassventil in der Vorspülphase geschlossen wird, in Abhängigkeit von einem oder mehreren Betriebsparametern der Hubkolbenbrennkraftmaschine gesteuert und / oder geregelt werden. Durch die weitere Bewegung des Kolbens im Zylinder in Richtung der unteren Totpunktposition wird das eingeschlossene Volumen im Brennraum vergrössert. Da das Auslassventil geschlossen ist, fällt der Druck im Brennraum unter den Wert eines Drucks in einem Einlassreceiver, über welchen Einlassreceiver die Spülluft in den Brennraum des Zylinders gelangt, wenn die Spülschlitze vom Kolben freigegeben sind, ab. Bei einem dritten Kurbelwinkel, der den Abschluss der Vorspülphase definiert, gibt der Kolben schliesslich die Spülschlitze zumindest teilweise frei, so dass Spülluft aus dem Einlassreceiver in den Brennraum einströmen kann, wobei das Auslassventil geschlossen bleibt. Durch den während der Vorspülphase im Brennraum bezüglich des Einlassreceivers erzeugten Unterdruck wird die Spülluft in den Brennraum angesaugt. Das heisst, der Turbolader, der die Spülluft über den Einlassreceiver in den Brennraum des Zylinders unter einem vorgebbaren Druck einbringt, wird durch den im Brennraum während der Expansionsbewegung des Kolbens in der Vorspülphase erzeugten Unterdruck in seiner Funktion unterstützt.

In der Nähe der unteren Totpunktposition wird das Auslassventil wieder geöffnet, so dass im folgenden Kompressionstakt (mit anschliessender Verbrennung) ein Teil der im Brennraum des Zylinders nach der Vorspülphase verbliebenen Abgase in bekannter Weise durch das Auslassventil über den Abgasstutzen der Aufladegruppe zugeführt werden kann.

Wenn die Hubkolbenbrennraftmaschine, zum Beispiel nach einem Neustart der Maschine die Grenzdrehzahl erreicht hat, erbringt der Turbolader genügend Leistung und die Hubkolbenbrennkraftmaschine wird nach einem an sich bekannten Zweitakt-Verfahren ohne Vorspülphase betrieben. Selbstverständlich kann die Hubkolbenbrennkraftmaschine bei speziellen Anwendungen auch oberhalb der Grenzdrehzahl nach dem erfindungsgemässen Verfahren betrieben werden.

Bevorzugt ist der Zeitpunkt, zu dem das Auslassventil betätigt wird, das heisst der Zeitpunkt zu dem es geschlossen oder geöffnet wird, unabhängig vom Kurbelwinkel frei wählbar. Das ist beispielsweise bei Grossdieselmotoren möglich, die über eine elektronische Steuereinheit anstelle einer Nockenwelle verfügen. Die Betätigung des Auslassventils wird durch eine frei programmierbare Ansteuereinheit in Abhängigkeit von der Drehzahl der Hubkolbenbrennkraftmaschine und / oder einem Kurbelwinkel und / oder dem Gasdruck im Brennraum des Zylinders und / oder der Temperatur im Brennraum des Zylinders und / oder von der Drehzahl der Aufladegruppe und / oder dem Gasdruck in der Aufladegruppe und / oder der Temperatur in der Aufladegruppe und / oder in Abhängigkeit anderer Betriebsparameter der Hubkolbenbrennkraftmaschine gesteuert und / oder geregelt.

In einem weiteren Ausführungsbeispiel des erfindungsgemässen Verfahrens erfolgt der Eintritt der Spülluft in den Brennraum des Zylinders durch ein Einlassventil, das bevorzugt im Zylinderdeckel des Zylinders des Grossdieselmotors untergebracht ist. Bei dieser Variante des erfindungsgemässen Verfahrens kann auch der Zeitpunkt zu dem das Einlassventil betätigt wird, das heisst der Zeitpunkt zu dem es geschlossen oder geöffnet wird, unabhängig vom Kurbelwinkel frei wählbar sein. Da die maximale Druckdifferenz zwischen Brennraum und Einlassreceiver auch von dem Kurbelwinkel abhängt, bei dem am Ende der Vorspülphase das Einlassventil geöffnet wird, kann die Menge an Frischluft, die im Anschluss an die Vorspülphase in den Brennraum des Zylinders strömt, durch geeignete Wahl des Kurbelwinkels, bei welcher dass Einlassventil am Ende der Vorspülphase öffnet, gesteuert und oder geregelt werden. Die Betätigung des Einlassventils kann ebenso wie die Betätigung des Auslassventils durch eine frei programmierbare Ansteuereinheit in Abhängigkeit von der Drehzahl der Hubkolbenbrennkraftmaschine und / oder dem Kurbelwinkel und / oder dem Gasdruck im Brennraum des Zylinders und / oder der Temperatur im Brennraum des Zylinders und / oder der Drehzahl der Aufladegruppe und / oder dem Gasdruck in der Aufladegruppe und / oder der Temperatur in der Aufladegruppe und / oder in Abhängigkeit anderer Betriebsparameter der Hubkolbenbrennkratmaschine gesteuert und / oder geregelt werden. Selbstverständlich muss die Betätigung des Einlassventils nicht durch eine frei programmierbare Ansteuereinheit gesteuert und / oder geregelt werden, sondern kann z.B. auch durch andere Einrichtungen, z.B. durch mechanische Einrichtungen, erfolgen.

Die erfindungsgemässe Zweitakt-Hubkolbenbrennkraftmaschine, insbesondere Grossdieselmotor, die nach dem erfindungsgemässen Verfahren betrieben wird, umfasst einen Zylinder mit einem Auslassventil und mindestens einer Spülluftöffnung, in welchem Zylinder ein Kolben entlang einer Lauffläche zwischen einer unteren Totpunktposition und einer oberen Totpunktposition hin- und herbewegbar angeordnet ist, sowie eine Aufladegruppe mit einer von Abgasen aus dem Brennraum des Zylinders angetriebenen Turbine zum Verdichten von Luft, wobei die verdichtete Luft als Spülluft dem Brennraum des Zylinders durch die Spülluftöffnung zugeführt wird.

Im folgenden wird die Erfindung an Hand der Zeichnung näher erläutert. Es zeigen:
- Fig. 1: schematisch die wesentlichen Teile eines Zweitakt-Grossdieselmotors mit Aufladegruppe;
- Fig. 2: in schematischer Darstellung ein Ausführungsbeispiel eines erfindungsgemässen Verfahren;
- Fig. 3: schematisch einen Zylinder eines Zweitakt-Grossdieselmotors mit Einlassventil.

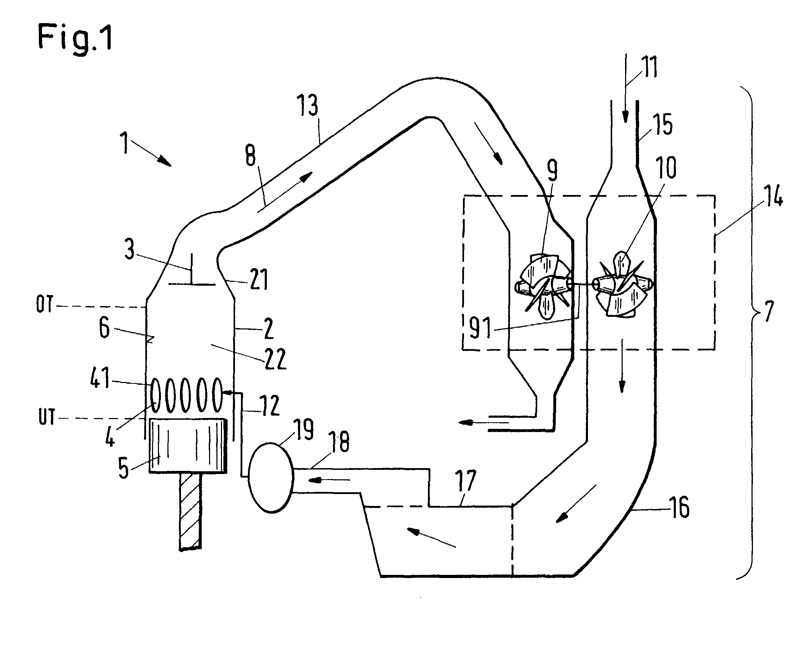

Fig. 1 zeigt in einer schematischen Darstellung die wesentlichen Teile eines Grossdieselmotors mit Aufladegruppe 7, der als Zweitakt-Motor mit Längsspülung ausgebildet ist und im folgenden gesamthaft mit dem Bezugszeichen 1 bezeichnet wird.

Der Grossdieselmotor 1 umfasst üblicherweise mehrere Zylinder 2 mit Zylinderdeckel 21 und einem darin angeordneten Auslassventil 3, in welchem Zylinder 2 ein Kolben 5 zwischen einer unteren Totpunktposition UT und einer oberen Totpunktposition OT entlang einer Lauffläche 6 hin- und herbewegbar angeordnet ist. Dabei wird die obere Totpunktposition OT des Kolbens 5 wie üblich mit einem Kurbelwinkel K_{W} von 0° bzw. 360° und die untere Totpunktposition UT des Kolbens 5 mit einem Kurbelwinkel K_{W} von 180° identifiziert. Der Zylinder 2 mit Zylinderdeckel 21 und der Kolben 5 begrenzen in bekannter Weise einen Brennraum 22. Im unteren Bereich des Zylinders 2 sind mehrere Spülluftöffnungen 4 vorgesehen, die als Spülschlitze 41 ausgeführt sind. Je nach Stellung des Kolbens 5 werden die Spülschlitze 41 von diesem überdeckt oder freigegeben. Durch die Spülschlitze 41 kann die als Spülluft 12 bezeichnete Frischluft in den Brennraum 22 des Zylinders 2 einströmen. Durch das im Zylinderdeckel 21 angeordnete Auslassventil 3 strömen die bei der Verbrennung entstandenen Abgase 8 durch einen Abgasstutzen 13, der sich an das Auslassventil 3 anschliesst, in eine Aufladegruppe 7. Die Aufladegruppe 7 umfasst als wesentliche Komponenten in an sich bekannter Weise ein Laufrad 10 zum Verdichten von Luft 11, sowie eine Turbine 9 zum Antreiben des Laufrades 10, das durch eine Achse 91 wirkfest mit der Turbine 9 verbunden ist. Die Turbine 9 und das Laufrad 10 sind in einem Gehäuse angeordnet und bilden einen Turbolader 14. Die Turbine 9 wird durch die einströmenden heissen Abgase 8 aus dem Brennraum 22 des Zylinders 2 angetrieben. Zum Beschicken des Brennraums 22 des Zylinders 2 mit Spülluft 12 wird durch das Laufrad 10 über einen Ansaugstutzen 15 Luft 11 angesaugt und im Turbolader 14 komprimiert. Aus dem Turbolader gelangt die komprimierte Luft durch einen nachgeschalteten Diffusor 16 und einen Ladeluftkühler 17 über eine Druckleitung 18 in einen Einlassreceiver 19, von dem aus die komprimierte Luft schliesslich als Spülluft 12 durch die als Spülschlitze 41 ausgebildeten Spülluftöffnungen 4 unter erhöhtem Druck in den Brennraum 22 des Zylinders 2 gelangt.

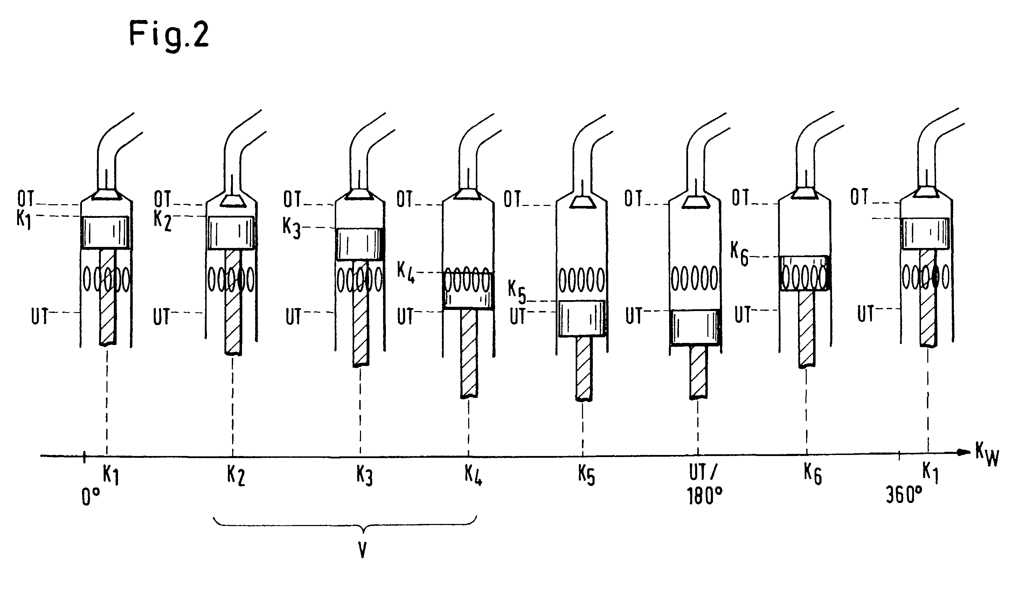

Das erfindungsgemässe Verfahren zum Betreiben einer Zweitakt-Hubkolbenbrennkraftmaschine 1 bei kleinen Drehzahlen unterhalb einer vorgebbaren Grenzdrehzahl wird in Fig. 2 schematisch für einen Zweitakt-Grossdieselmotor 1 illustriert. Zur Erläuterung der wesentlichen Schritte zur Durchführung des erfindungsgemässen Verfahrens ist in Fig. 2 ein vollständiger Zweitakt-Zyklus dargestellt. Gezeigt wird die Stellung des Zylinders 2 bei acht ausgewählten Kurbelwinkeln K_{W} innerhalb eines kompletten Zweitakt-Zyklus, wobei ein Kurbelwinkel K_{W} von 0° der oberen Totpunktposition OT und ein Kurbelwinkel K_{W} von 180° der unteren Totpunktposition UT des Kolbens 5 entspricht. Da es sich bei dem erfindungsgemässen Verfahren um ein Zweitakt-Verfahren handelt, ist ein Kurbelwinkel K_{W} von 0° identisch mit einem Kurbelwinkel K_{W} von 360°.

Bei einem Kurbelwinkel K₁ ist im Brennraum 22 des Zylinders 2 nach einem vorangegangenen Kompressionstakt eine Verbrennung im wesentlichen abgeschlossen, so dass im Brennraum 22 heisse Verbrennungsgase unter einem Arbeitsdruck anstehen und dadurch der Kolben 5 im Zylinder 2 ausgehend vom Kurbelwinkel K₁ in einem Expansionstakt in Richtung der unteren Totpunktposition UT, entsprechend einem Kurbelwinkel K_{W} von 180°, bewegt wird. Das Auslassventil 3 ist beim Kurbelwinkel K₁ geschlossen. In einer Vorspülphase V, die nach erfolgter Kraftstoffeinspritzung mit nachfolgender Verbrennung und vor einem daran anschliessenden Eintritt der Spülluft 12 in den Brennraum 22 des Zylinder 2, also bevor der Kolben 5 nach einem Verbrennungstakt die Spülschlitze 41 erstmals freigibt und bei einem vorgebbaren Kurbelwinkel K₂ beginnt, wird beim Kurbelwinkel K₂ das Auslassventil 3 geöffnet. Dabei wird der Beginn der Vorspülphase V, also der Kurbelwinkel K₂ so gewählt, dass beim Öffnen des Auslassventils beim Kurbelwinkel K₂ der Druck im Brennraum 22 des Zylinders 2 noch deutlich über dem Druck im Abgasstutzen 13 liegt. Aufgrund der Druckdifferenz zwischen Brennraum 22 und Abgasstutzen 13 strömen die heissen Abgase 8 durch den Abgasstutzen 13 in den Turbolader 14 und treiben dort die Turbine 9 und damit das Laufrad 10 an, so dass, wie oben beschrieben, komprimierte Luft als Spülluft 12 zum Einbringen in einen Brennraum 22 eines Zylinders 2 zur Verfügung steht, dessen Spülschlitze 41 zu diesem Zeitpunkt vom entsprechenden Kolben 5 freigegeben sind. Das heisst, durch das Öffnen des Auslassventils 3 wird in bekannter Weise ein Teil der thermischen Energie der Abgase 8 bereits vor Freigabe der Spülschlitze 41, also vor dem Einströmen der Spülluft 12 in den Brennraum 22 des Zylinders 2 zum Antrieb der Turbine 9 des Turboladers 14 ausgenutzt.

Bei einem Kurbelwinkel K₃, der etwas grösser als der Kurbelwinkel K₂ ist, hat sich die Druckdifferenz zwischen Brennraum 22 und Abgasstutzen 13 im wesentlichen ausgeglichen und das Auslassventil 3 wird beim Kurbelwinkel K₃ noch während der Vorspülphase V wieder geschlossen. Da die maximale Druckdifferenz zwischen Brennraum 22 und Einlassreceiver 19 von dem Kurbelwinkel K_{W} abhängt, bei dem in der Vorspülphase V das Auslassventil 3 wieder geschlossen wird, kann die Menge an Frischluft, die während der Vorspülphase V nach Freigabe der Spülluftöffnung 4 in den Brennraum 22 eingebracht wird, durch die Vorgabe des Kurbelwinkels K_{W}, bei welchem das Auslassventil 3 in der Vorspülphase V geschlossen wird, in Abhängigkeit von der Drehzahl der Hubkolbenbrennkraftmaschine 1, dem Kurbelwinkel K_{W} und / oder dem Gasdruck im Brennraum 22 des Zylinders 2 und / oder der Temperatur im Brennraum 22 des Zylinders 2 und / oder von der Drehzahl der Aufladegruppe 7 und / oder dem Gasdruck in der Aufladegruppe 7 und / oder der Temperatur in der Aufladegruppe 7 und / oder in Abhängigkeit anderer Betriebsparameter der Hubkolbenbrennkraftmaschine 1 gesteuert und / oder geregelt werden. Durch die weitere Bewegung des Kolbens 5 im Zylinder 2 in Richtung der unteren Totpunktposition UT wird das eingeschlossene Volumen im Brennraum 22 vergrössert, wodurch der Druck im Brennraum 22 unter den Druck im Einlassreceiver 19 abfällt, da das Auslassventil 3 geschlossen ist. Bei einem Kurbelwinkel K₄, der das Ende der Vorspülphase V markiert, gibt der Kolben 5 die Spülschlitze 41 zumindest teilweise frei, so dass Spülluft 12 aus dem Einlassreceiver 19 in den Brennraum 22 einströmen kann, wobei das Auslassventil 3 geschlossen bleibt. Durch den in der Vorspülphase V erzeugten Unterdruck im Brennraum 22 wird die Spülluft 12 in den Brennraum 22 angesaugt. Das heisst, der Turbolader 14, der die Spülluft 12 über den Einlassreceiver 19 in den Brennraum 22 des Zylinders 2 unter einem vorgebbaren Druck einbringt, wird durch den im Brennraum 22 während der Expansionsbewegung des Kolbens 5 in der Vorspülphase V erzeugten Unterdruck in seiner Funktion unterstützt.

In der Nähe der unteren Totpunktposition UT bei einem Kurbelwinkel K₅ und bevor oder nachdem der Kolben 5 die untere Totpunktposition UT erreicht, wird das Auslassventil 3 geöffnet, so dass im folgenden Kompressionstakt die Abgase 8 durch das Auslassventil 3 über den Abgasstutzen 13 der Aufladegruppe 7 zugeführt werden können. Bei einem Kurbelwinkel von 180° ist das Auslassventil 3 weiterhin geöffnet und es beginnt in bekannter Weise ein Kompressionstakt, wobei die Spülschlitze 41 beim Erreichen eines Kurbelwinkels K₆ geschlossen werden. Dabei wird das Auslassventil 3, je nach Anforderung, zu einem vorgebbaren Zeitpunkt vor oder nach Erreichen des Kurbelwinkels K₆ während des Kompressionstakts, d.h. nachdem der Kolben die untere Totpunktposition UT passiert hat geschlossen. In einer anderen Variante des erfindungsgemässen Verfahrens kann das Auslassventil 3 insbesondere auch nach Freigabe der Spülluftöffnung 4 wieder geschlossen werden, bevor der Kolben die untere Totpunktposition UT erreicht hat. Durch die weitere Bewegung des Kolbens 5 in Richtung der oberen Totpunktposition OT wird die im Brennraum 22 eingeschlossene Luft komprimiert, zu einem vorgebbaren Zeitpunkt in an sich bekannter Weise Kraftstoff mittels einer nicht gezeigten Einspritzdüse in den Brennraum 22 eingebracht und es folgt die Verbrennung des Kraftstoff-Luftgemischs im Brennraum 22.

Die Betätigung des Auslassventils 3 kann dabei durch eine nicht gezeigte frei programmierbare Ansteuereinheit in Abhängigkeit von der Drehzahl der Hubkolbenbrennkraftmaschine 1, dem Kurbelwinkel K_{W} und / oder dem Gasdruck im Brennraum 22 des Zylinders 2 und oder der Temperatur im Brennraum 22 des Zylinders 2 und / oder von der Drehzahl der Aufladegruppe 7 und / oder dem Gasdruck in der Aufladegruppe 7 und / oder der Temperatur in der Aufladegruppe 7 und / oder in Abhängigkeit anderer Betriebsparameter der Hubkolbenbrennkraftmaschine 1 gesteuert und / oder geregelt werden.

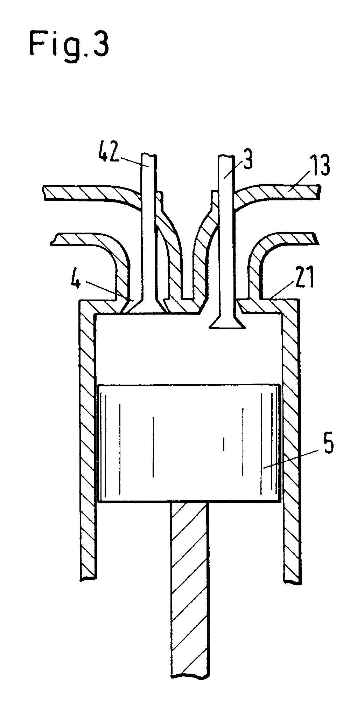

Das erfindungsgemässe Verfahren zum Betreiben einer Zweitakt-Hubkolbenbrennkaftmaschine 1 kann natürlich auch erfolgreich bei Grossdieselmotoren 1 eingesetzt werden, die anstelle von Spülschlitzen 41 in der Lauffläche 6 des Zylinders 2 als Spülluftöffnung 4, wie in Fig. 3 gezeigt, ein Einlassventil 42 aufweisen. Das erfindungsgemässe Verfahren wird bei einer Hubkolbenbrennkraftmaschine 1 mit Einlassventil 42 in analoger Weise durchgeführt. Während jedoch bei einem Grossdieselmotor 1 mit Längsspülung die Freigabe der Spülluftöffnung 4, also der Spülschlitze 41, durch die Stellung des Kolbens 5 im Zylinder 2 vorgegeben wird, muss bei einem Grossdieselmotor 1 mit Einlassventil 42 das Einlassventil 42 durch eine Ansteuereinrichtung betätigt werden. Bevorzugt wird die Betätigung des Einlassventils 42 durch eine nicht gezeigte frei programmierbare Ansteuereinheit in Abhängigkeit von der Drehzahl der Hubkolbenbrennkraftmaschine 1, dem Kurbelwinkel K_{W} und / oder dem Gasdruck im Brennraum 22 des Zylinders 2 und / oder der Temperatur im Brennraum 22 des Zylinders 2 und / oder der Drehzahl der Aufladegruppe 7 und oder dem Gasdruck in der Aufladegruppe 7 und / oder der Temperatur in der Aufladegruppe 7 und / oder in Abhängigkeit anderer Betriebsparameter der Hubkolbenbrennkraftmaschine 1 gesteuert und / oder geregelt.

Wie bereits erwähnt, kommt das zuvor geschilderte erfindungsgemässe Verfahren bevorzugt bei Drehzahlen in einem unteren Lastbereich unterhalb einer vorgebbaren Grenzdrehzahl zum Einsatz. Wenn die Hubkolbenbrennkraftmaschine 1 die Grenzdrehzahl überschritten hat, hat der Turbolader 14 eine vorgebbare Leistung erreicht und die Hubkolbenbrennkraftmaschine 1 wird nach einem aus dem Stand der Technik bekannten Zweitakt-Verfahren betrieben.

Durch Verwendung eines erfindungsgemässen Verfahrens werden die Nachteile, die der Einsatz zusätzlicher Hilfslader zur Unterstützung des Abgasturboladers im Niederlastbetrieb mit sich bringt, vermieden. So wird nicht nur der Aufwand für die Anschaffung und die Installation der Hilfslader, sowie die zu ihrer Ansteuerung notwendigen Einrichtungen vermieden. Auch die Gestaltung des Einlassreceivers wird deutlich weniger aufwendig, da insbesondere auf die in Form von Klappen ausgeführten Rückströmsicherungen im Einlassreceiver verzichtet werden kann. Auch der dafür notwendige Wartungs- und Reparaturaufwand mit den damit verbundenen Mehrkosten für Betriebsmittel, Ersatzteile und Personal entfällt. Insbesondere wird durch die Verwendung eines erfindungsgemässen Verfahrens deutlich Platz und Gewicht eingespart. Darüber hinaus ist der Betrieb der Hubkolbenbrennkraftmaschine ohne Hilfslader auch aus energetischer Sicht günstiger, da die elektrische Energie für deren Betrieb nicht mehr zur Verfügung gestellt werden muss und letztlich Gewicht eingespart werden kann. Nicht zuletzt resultiert der Einsatz des erfindungsgemässen Verfahrens in einer Herabsetzung des Treibstoffverbrauchs der Hubkolbenbrennkraftmaschine.

## Patentansprüche

1. Verfahren zum Betreiben einer Zweitakt-Hubkolbenbrennkraftmaschine (1), insbesondere eines Grossdieselmotors, umfassend:
- einen Zylinder (2) mit einem Auslassventil (3) und einer Spülluftöffnung (4), in welchem Zylinder (2) ein Kolben (5) entlang einer Lauffläche (6) zwischen einer unteren Totpunktposition (UT) und einer oberen Totpunktposition (OT) hin- und herbewegt wird, sowie
- eine Aufladegruppe (7) mit einer von Abgasen (8) aus einem Brennraum (22) des Zylinders (2) angetriebenen Turbine (9) mit Lauffrad (10) zum Verdichten von Luft (11), wobei die verdichtete Luft als Spülluft (12) dem Brennraum (22) des Zylinders (2) durch die Spülluftöffnung (4) zugeführt wird,
**dadurch gekennzeichnet, dass** zumindest unterhalb einer vorgebbaren Grenzdrehzahl nach erfolgter Kraftstoffeinspritzung mit nachfolgender Verbrennung und vor einem daran anschliessenden Eintritt der Spülluft (12) in den Brennraum (22) des Zylinders (2), das Auslassventil (3) in einer Vorspülphase (V) zuerst geöffnet und dann geschlossen wird.

2. Verfahren nach Anspruch 1, wobei das Auslassventil (3) nur unterhalb der vorgebbaren Grenzdrehzahl der Hubkolbenbrennkraftmaschine (1) während der Vorspülphase (V) zuerst geöffnet und dann geschlossen wird.

3. Verfahren nach Anspruch 1 oder 2, wobei die Betätigung des Auslassventils (3) durch eine frei programmierbare Ansteuereinheit in Abhängigkeit von der Drehzahl der Hubkolbenbrennkraftmaschine und / oder einem Kurbelwinkel (K_{W}) und / oder dem Gasdruck im Brennraum (22) des Zylinders (2) und / oder der Temperatur im Brennraum (22) des Zylinders (2) und / oder von der Drehzahl der Aufladegruppe (7) und / oder dem Gasdruck in der Aufladegruppe (7) und / oder der Temperatur in der Aufladegruppe (7) und / oder in Abhängigkeit anderer Betriebsparameter der Hubkolbenbrennkraftmaschine (1) gesteuert und / oder geregelt wird.

4. Verfahren nach einem der vorangehenden Ansprüche, wobei die Spülluft (12) durch Spülluftöffnungen (4), die als Spülschlitze (41) in der Lauffläche (6) des Zylinders (2) ausgebildet sind, dem Brennraum (22) des Zylinder (2) zugeführt wird.

5. Verfahren nach einem der Ansprüche 1 bis 3, wobei der Eintritt der Spülluft (12) in den Brennraum (22) des Zylinders (2) durch ein Einlassventil (42) an der Spülluftöffnung (4) gesteuert und / oder geregelt wird.

6. Verfahren nach Anspruch 5, wobei die Betätigung des Einlassventils (42) durch eine frei programmierbare Ansteuereinheit in Abhängigkeit von der Drehzahl der Hubkolbenbrennkraftmaschine und / oder dem Kurbelwinkel (K_{W}) und / oder dem Gasdruck im Brennraum (22) des Zylinders (2)) und / oder von der Drehzahl der Aufladegruppe (7) und / oder der Temperatur im Brennraum (22) des Zylinders (2) und / oder dem Gasdruck in der Aufladegruppe(7) und / oder der Temperatur in der Aufladegruppe (7) und / oder in Abhängigkeit anderer Betriebsparameter der Hubkolbenbrennkratmaschine (1) gesteuert und / oder geregelt wird.

7. Verfahren nach Anspruch 5 oder 6, wobei die Betätigung des Einlassventils (42) durch eine mechanische Ansteuereinrichtung, insbesondere durch eine Steuerwelle, gesteuert und / oder geregelt wird.

8. Verfahren nach einem der vorangehenden Ansprüche, bei welchem das Auslassventil (3) in der Nähe der unteren Totpunktposition (UT) geöffnet und dann zu einem vorgebbaren Zeitpunkt vor oder nach Erreichen eines Kurbelwinkels (K₆) während eines Kompressionstakts wieder geschlossen wird.

9. Zweitakt-Hubkolbenbrennkraftmaschine (1), insbesondere Grossdieselmotor, umfassend einen Zylinder (2) mit einem Auslassventil (3) und einer Spülluftöffnung (4), in welchem Zylinder (2) ein Kolben (5) entlang einer Lauffläche (6) zwischen einer unteren Totpunktposition (UT) und einer oberen Totpunktposition (OT) hin- und herbewegbar angeordnet ist, sowie eine Aufladegruppe (7) mit einer von Abgasen (8) aus dem Zylinder (2) angetriebenen Turbine (9) zum Verdichten von Luft (11), wobei die verdichtete Luft als Spülluft (12) einem Brennraum (22) des Zylinders (2) durch die Spülluftöffnung (4) zugeführt wird, **dadurch gekennzeichnet, dass** die Hubkolbenbrennkraftmaschine (1) durch eine Steuereinheit gemäss einem Verfahren nach einem der Ansprüche 1 bis 8 betrieben wird.

## Claims

1. A method for the operation of a two stroke reciprocating internal combustion engine (1), in particular of a large diesel engine, including:
- a cylinder (2) with an outlet valve (3) and a scavenging air opening (4), in which cylinder (2) a piston (5) is moved to and fro along a running surface (6) between a bottom dead centre position (UT) and a top dead centre position (OT), and
- a supercharger group (7) with a turbine (9) driven by exhaust gases (8) from a combustion chamber (22) of the cylinder (2) and having a rotor (10) for the compression of air (11), with the compressed air being supplied as scavenging air (12) to the combustion chamber (22) of the cylinder (2) through the scavenging air opening (4),
**characterised in that** the outlet valve (3) is first opened and then closed in a pre-scavenging phase (V) at least below a pre-settable speed of rotation limit after a fuel injection has taken place with subsequent combustion and prior to a subsequent entry of the scavenging air (12) into the combustion chamber (22) of the cylinder (2).

2. A method in accordance with claim 1, wherein the outlet valve (3) is only first opened and then closed below the pre-settable speed of rotation limit of the reciprocating internal combustion engine (1) during the pre-scavenging phase (V).

3. A method in accordance with claim 1 or claim 2, wherein the actuation of the outlet valve (3) is controlled and/or regulated by a freely programmable control unit in dependence on the speed of the reciprocating internal combustion engine and/or on the crank angle (K_{W)} and/or on the gas pressure in the combustion chamber (22) of the cylinder (2) and/ or on the temperature in the combustion chamber (22) of the cylinder (2) and/or on the speed of the supercharger group (7) and/or on the gas pressure in the supercharger group (7) and/or on the temperature in the supercharger group (7) and/or in dependence on other operating parameters of the reciprocal internal combustion engine (1).

4. A method in accordance with any one of the preceding claims, wherein the scavenging air (12) is supplied to the combustion chamber (22) of the cylinder (2) through scavenging air openings (4) which are formed as scavenging slots (41) in the running surface (6) of the cylinder (2).

5. A method in accordance with any one of claims 1 to 3, wherein the entry of the scavenging air (12) into the combustion chamber (22) of the cylinder (2) is controlled and/or regulated by an inlet valve (42) at the scavenging air opening (4).

6. A method in accordance with claim 5, wherein the actuation of the inlet valve (42) is controlled and/or regulated by a freely programmable control unit in dependence on the speed of the reciprocating internal combustion engine and/or on the crank angle (K_{W}) and/or on the gas pressure in the combustion chamber (22) of the cylinder (2) and/or on the speed of the supercharger group (7) and/or on the temperature in the combustion chamber (22) of the cylinder (2) and/or on the gas pressure in the supercharger group (7) and/or on the temperature in the supercharger group (7) and/or in dependence on other operating parameters of the reciprocating internal combustion engine (1).

7. A method in accordance with claim 5 or claim 6, wherein the actuation of the inlet valve (42) is controlled and/or regulated by a mechanical control device, in particular by a control shaft.

8. A method in accordance with any one of the preceding claims, wherein the outlet valve (3) is opened close to the bottom dead centre position (UT) and is then closed again at a pre-settable time before or after reaching a crank angle (K₆) during a compression cycle.

9. A two stroke reciprocating internal combustion engine (1), in particular a large diesel engine, including a cylinder (2) with an outlet valve (3) and a scavenging air opening (4), in which cylinder (2) a piston (5) is arranged movable to and fro along a running surface (6) between a bottom dead centre position (UT) and a top dead centre position (OT), and a supercharger group (7) having a turbine (9) driven by exhaust gases (8) from the cylinder (2) for the compression of air (11), with the compressed air being supplied as scavenging air (12) to a combustion chamber (22) of the cylinder (2) through the scavenging air opening (4), **characterised in that** the reciprocating internal combustion engine (1) through a control unit is operated in accordance with a method in accordance with any one of claims 1 to 8.

## Revendications

1. Procédé de fonctionnement d'un moteur à combustion interne à deux temps à piston alternatif (1), en particulier d'un grand moteur diesel, comprenant:
- un cylindre (2) avec une soupape d'échappement (3) et une ouverture d'air de balayage (4), cylindre (2) dans lequel un piston (5) coulisse selon un mouvement de va-et-vient le long d'une face de roulement (6) entre une position de point mort bas (UT) et une position de point mort haut (OT), et
- un groupe de suralimentation (7) avec une turbine (9) entraînée par les gaz d'échappement (8) d'une enceinte de combustion (22) du cylindre (2), avec une roue de roulement (10) pour la compression d'air (11), où l'air comprimé est amené comme air de balayage (12) à l'enceinte de combustion (22) du cylindre (2) à travers l'ouverture d'air de balayage (4),
**caractérisé en ce qu'**au moins en dessous d'un nombre de tours limite prédéfinissable, après l'injection du combustible avec combustion suivante et avant une entrée suivante, faisant suite à celle-ci, de l'air de balayage (12) dans l'enceinte de combustion (22) du cylindre (2), la soupape d'échappement (3), lors d'une phase de balayage préalable (V), est d'abord ouverte et ensuite fermée.

2. Procédé selon la revendication 1, où la soupape d'échappement (3) est d'abord ouverte et ensuite fermée seulement en dessous du nombre de tours limite prédéfinissable du moteur à combustion interne à piston alternatif (1) pendant la phase de balayage préalable (V).

3. Procédé selon la revendication 1 ou 2, où l'actionnement de la soupape d'échappement (3) est commandé et/ou réglé par une unité de commande librement programmable en fonction du nombre de tours du moteur à combustion interne à piston alternatif et/ou d'un angle de manivelle (K_{w}) et/ou de la pression du gaz dans l'enceinte de combustion (22) du cylindre (2) et/ou de la température dans l'enceinte de combustion (22) du cylindre (2) et/ou du nombre de tours du groupe de suralimentation (7) et/ou de la pression du gaz dans le groupe de suralimentation (7) et/ou de la température dans le groupe de suralimentation (7) et/ou en fonction d'autres paramètres de fonctionnement du moteur à combustion interne à piston alternatif.

4. Procédé selon l'une des revendications précédentes, où l'air de balayage (12) est amené à travers des ouvertures d'air de balayage (4), qui sont réalisées comme fentes de balayage (41) dans la face de roulement (6) du cylindre (2), à l'enceinte de combustion (22) du cylindre (2).

5. Procédé selon l'une des revendications 1 à 3, où l'entrée de l'air de balayage (12) dans l'enceinte de combustion (22) du cylindre (2) est commandée et/ou réglée par une soupape d'admission (42) à l'ouverture d'air de balayage (4).

6. Procédé selon la revendication 5, où l'actionnement de la soupape d'admission (42) est commandé et/ou réglé par une unité de commande programmable librement en fonction du nombre de tours du moteur à combustion interne à piston alternatif et/ou de l'angle du vilebrequin (K_{w}) et/ou de la pression de gaz dans l'enceinte de combustion (22) du cylindre (2) et/ou du nombre de tours du groupe de suralimentation (7) et/ou de la température dans l'enceinte de combustion (22) du cylindre (2) et/ou de la pression du gaz dans le groupe de suralimentation (7) et/ou de la température dans le groupe de suralimentation (7) et/ou en fonction d'autres paramètres de fonctionnement du moteur à combustion interne à piston alternatif (1).

7. Procédé selon la revendication 5 ou 6, où l'actionnement de la soupape d'admission (42) est commandé et/ou réglé par une installation de commande mécanique, en particulier par un arbre de commande.

8. Procédé selon l'une des revendications précédentes, où la soupape d'échappement (3) est ouverte à proximité de la position du point mort bas (UT) et est ensuite de nouveau fermée à un instant prédéfinissable avant ou après l'atteinte d'un angle de vilebrequin K₆ pendant une période de compression.

9. Moteur à combustion interne à deux temps à piston alternatif (1), en particulier grand moteur diesel, comprenant un cylindre (2) avec une soupape d'échappement (3) et une ouverture d'air de balayage (4), cylindre (2) dans lequel un piston (5) coulisse d'une manière déplaçable selon un mouvement de va-et-vient le long d'une face de roulement (6) entre une position de point mort bas (UT) et une position de point mort haut (OT), et un groupe de suralimentation (7) avec une turbine (9) entraînée par les gaz d'échappement (8) du cylindre (2) pour la compression de l'air (11), où l'air comprimé est amené comme air de balayage (12) à une enceinte de combustion (22) du cylindre (2) à travers l'ouverture d'air de balayage (4), **caractérisé en ce que** le moteur à combustion interne à piston alternatif (1) est amené par une unité de commande à fonctionner selon un procédé selon l'une des revendications 1 à 8.
